(19) **Europäisches Patentamt / European Patent Office / Office européen des brevets**

(11) **EP 2 314 405 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(51) Int Cl.:
**B23F 9/10** *(2006.01)*      **B23F 21/22** *(2006.01)*

(21) Anmeldenummer: **09172255.3**

(22) Anmeldetag: **05.10.2009**

(54) **Verfahren zum Erzeugen von Kegelrädern mit Hypozykloidverzahnung im kontinuierlichen Formverfahren unter Verwendung entsprechender Werkzeuge**

Method for producing bevel gears having hypocycloidal teeth in the continuous forming method using corresponding tools

Procédé de production de roues coniques dotées d'une denture hypocycloïde dans le procédé de moulage en continu en utilisant des outils correspondants

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**27.04.2011 Patentblatt 2011/17**

(73) Patentinhaber: **Klingelnberg AG**
**8023 Zürich (CH)**

(72) Erfinder: **Engemann, Karl-Heinz**
**86368 Gersthofen (DE)**

(74) Vertreter: **Heusch, Christian**
**OK pat AG**
**Chamerstrasse 50**
**6300 Zug (CH)**

(56) Entgegenhaltungen:
**EP-A2- 1 348 509     US-A- 1 982 036**
**US-A- 3 020 808**

EP 2 314 405 B1

**Beschreibung**

Die vorliegende Erfindung betrifft Verfahren zum Erzeugen von geradverzahnten Kegelrädern mit Hypozykloidverzahnung im kontinuierlichen Formverfahren, insbesondere unter Verwendung von Fräsmesserköpfen.

Stand der Technik

Es gibt verschiedene Typen von Kegelrädern, wobei man diese Typen unter anderem anhand des Verlaufs der Flankenlängslinien unterscheidet. Nach dem Verlauf der Flankenlängslinien werden folgende Kegelräder unterschieden:

- geradverzahnte Kegelräder

- schrägverzahnte Kegelräder

- spiralverzahnte Kegelräder.

Eine Kegelradpaarverzahnung kann durch die zugehörige virtuelle Planradverzahnung eindeutig festgelegt werden (wenn die Teilkegelwinkel bekannt sind). Das entsprechende Planrad kann man sich als hauchdünne Profilscheibe vorstellen. Das Planrad entsteht aus der Kegelradverzahnung dadurch, dass der Teilkegelwinkel auf $\delta_p = 90°$ gesetzt wird.

Bei spiralverzahnten Kegelrädern ist eine Unterteilung im Hinblick auf die Form der Flankenlängslinie möglich:

- Kreisbogen

- Epizykloide, insbesondere verlängerte Epizykloide

- Evolvente

- Hypozykloide, insbesondere verlängerte Hypozykloide.

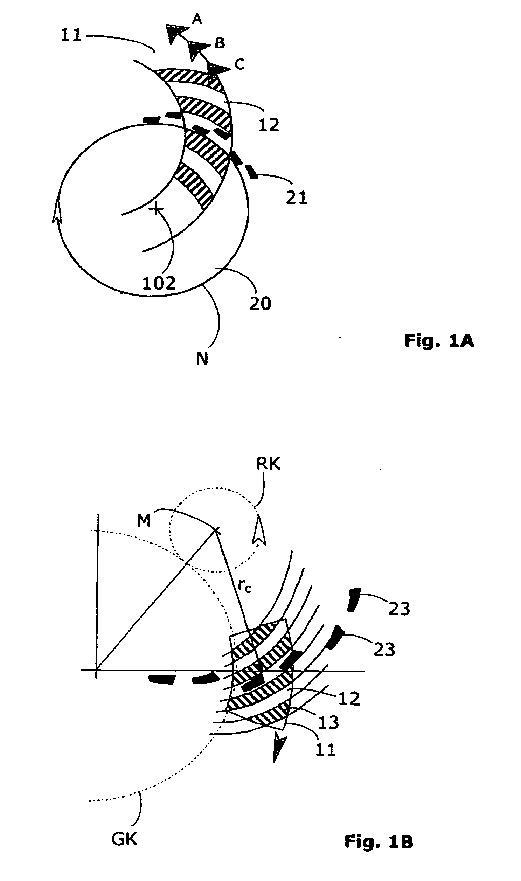

Kreisbogen-verzahnte Kegelräder haben einen Kreisbogen als Flankenlängslinie. Kreisbogen-verzahnte Kegelräder werden im Einzelteilverfahren (auch intermittierendes Teilverfahren, intermitted indexing process, single indexing process oder face milling genannt) gefertigt. Das Einzelteilverfahren ist in Fig. 1A schematisch dargestellt. Die Messer 21 eines Messerkopfs 20 vollziehen eine kreisförmige Bewegung während das zu erzeugende Kegelrad 11 in einer festen Winkelposition ruht. Zum Fertigen weiterer Zahnlücken wird der Messerkopf 20 zurück gezogen und das Werkstück 11 um einen Teilungswinkel gedreht. Das schrittweise Weiterdrehen (hier im Gegenuhrzeigersinn) ist in Fig. 1A durch die Pfeile A, B und C (Teilungsdrehung genannt) angedeutet. Es wird somit immer eine Zahnlücke 22 auf einmal gefertigt.

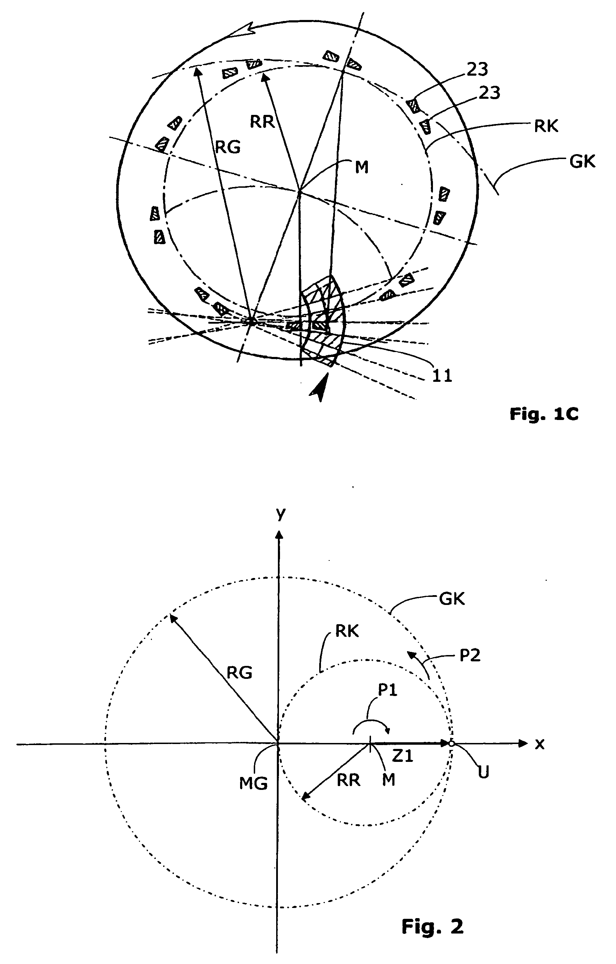

Epizykloidisch, insbesondere erweitert-epizykloidisch (auch verlängertepizykloidisch genannt), verzahnte Kegelräder werden durch ein kontinuierliches Teilverfahren (auch kontinuierliches Wälzfräsen, continuous indexing process, oder face hobbing genannt) gefertigt. Bei der Erzeugung der Epizykloide im kontinuierlichen Teilverfahren entspricht das Verhältnis von Planradzähnezahl $z_p$ des Kegelrads zu Gangzahl $G_x$ des Stabmesserkopfes (Anzahl der Messergruppen) dem Verhältnis vom Radius RG des Grundkreises GK und dem Radius RR des Rollkreises RK. Man spricht von einer verlängerten Epizykloide, wenn der Messerkopfnennradius $r_c$, auf dem die Schneiden der Messer 23 sitzen, größer als der Radius RR des Rollkreises RK ist (siehe Fig. 1B). Bei diesem kontinuierlichen Teilverfahren drehen sich sowohl der Messerkopf als auch das Werkstück 11 in einem zeitlich aufeinander abgestimmten Bewegungsablauf. Die Teilung erfolgt also kontinuierlich und Lücken 12 und die entsprechenden Zähne 13 werden quasi gleichzeitig erzeugt. Ein entsprechendes Beispiel ist in Fig. 1B dargestellt. Der Messerkopf dreht sich hier im Gegenuhrzeigersinn, während sich das Werkstück 11 im Uhrzeigersinn dreht (diese Drehbewegung wird auch Planraddrehung genannt). In diesem Fall wird eine Epizykloide (z.B. eine verlängerte Epizykloide) erzeugt. Die Bewegungen erfolgen hier also im Gegenlauf. Wenn sich beide in der gleichen Richtung drehen, dann wird eine Hypozykloide erzeugt (wie in Fig. 1C gezeigt). In Fig. 1B ist zu erkennen, dass die Messer 23 eines entsprechenden Messerkopfes typischerweise paarweise (bei zwei, drei und mehr Messern pro Messergruppe auch gruppenweise genannt) angeordnet sind. In Fig. 1B ist zu erkennen, dass der Rollkreis RK des Messerkopfes entlang des Grundkreises GK des Werkstücks 11 abrollt. M bezeichnet hier den Mittelpunkt des Messerkopfes. Dieser Mittelpunkt M fällt mit dem Mittelpunkt des Rollkreises RK zusammen. Die Kopplung der beiden Drehbewegungen wird so vorgenommen, dass sich jeweils nur ein Messerpaar, oder eine Messergruppe, durch eine Zahnlücke 12 bewegt.

Ein Kegelrad mit einer "geradlinigen" Hypozykloide als Flankenlängslinie (hier auch als geradverzahntes Kegelrad mit Hypozykloidverzahnung bezeichnet) kann nach dem in Fig. 2 gezeigten Prinzip erzeugt werden. Das gezeigte mathematische Prinzip ist aus verschiedenen Lehrbüchern, aber auch aus der Patentanmeldung EP 1348509 A2 bekannt, welche ein Verfahren gemäß dem Oberbegriff des Anspruchs 1 zeigt. Prinzipiell bekannt ist dieser Ansatz auch aus "Stanki dja obrabotki konitscheskich zubtschatych kolos", Izdanie 2-e, V. N. Kedrinskij, K. M. Pismanik, Izdatelstvo "Maschinostroenie" Moskva 1967, Seiten 506 - 508.

Das Verfahren, das in der Patentanmeldung EP 1348509 A2 beschrieben ist, findet eher bei kleineren Übersetzungsverhältnissen Anwendung.

Um eine Hypozykloide zu erhalten, rollt der Rollkreis RK mit dem Radius RR im Inneren des feststehenden Grundkreises GK mit Radius RG. Der Rollkreis RK dreht sich um seine Achse (Mittelpunkt M), wie durch den Pfeil P1 angedeutet ist. Wie durch den Pfeil P2 angedeutet, rollt der Rollkreis RK dabei im Gegenuhrzeigersinn im Inneren des Grundkreises GK (die Drehrichtung könnten auch umgekehrt sein). Der Zeiger Z1 ist im Rollkreis RK ortsfest radial nach außen gerichtet und einem erzeugenden Punkt U am Umfang des Rollkreises RK zugeordnet. Dieser Punkt U ist ortsfest im Koordinatensystem des Rollkreises RK. D.h. dieser Punkt U ist mit dem Rollkreis RK fest verbunden. Durch die Rollbewegung des Punktes U, d.h. durch die eigene Drehung um den Punkt M gekoppelt mit der Satellitenbewegung um dem Mittelpunkt des Grundkreises GK, erzeugt der Punkt U in dem x-y-Koordinatensystem des Grundkreises GK eine Hypozykloide HY, bzw. in dem gezeigten Spezialfall eine Gerade. Der Punkt U definiert oder beschreibt also eine geradlinige Hypozykloide (HY), wenn der Rollkreis RK im Grundkreis GK abrollt. Der Messerkopfradius $r_c$ beträgt hier $r_c$ = RR. Die beiden Kreise RK und GK sind hier in einem kartesischen x-y-Koordinatensystem dargestellt.

Die Parameterdarstellung in diesem x-y-Koordinatensystem lautet wie folgt:

$$x = (RG - RR)\cos\lambda - RR\cos\frac{RG - RR}{RR}\lambda \qquad (1)$$

$$y = (RG - RR)\sin\lambda - RR\sin\frac{RG - RR}{RR}\lambda \qquad (2)$$

In diesen Gleichungen (1) und (2) stellt $\lambda$ den Drehwinkel des Mittelpunktes M des Rollkreises RK in Bezug auf den Mittelpunkt MG des Grundkreises GK dar. In Fig. 2 ist eine Momentaufnahme gezeigt wo folgendes gilt: $\lambda = 0$, x = RG, y = 0. Die Koordinaten von U lauten [RG, 0].

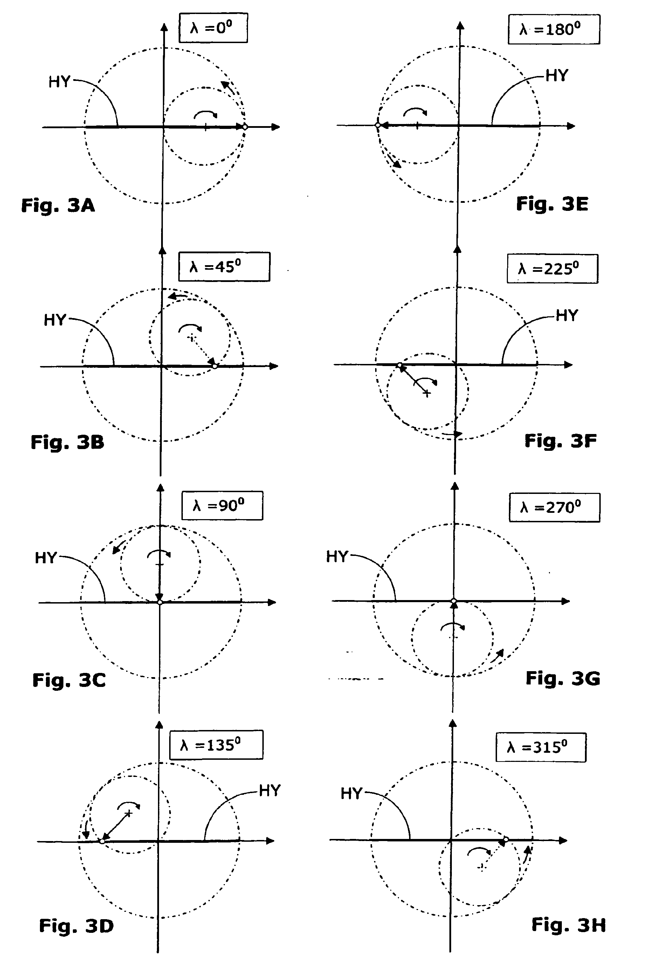

In den Figuren 3A bis 3H ist anhand einer Sequenz dargestellt, dass es einen Sonderfall gibt, bei dem aus der Hypozykloide HY eine Gerade wird. In diesen Figuren wurden bewusst die Bezeichnungen und Bezugszeichen weggelassen, um die Übersichtlichkeit der Darstellung nicht zu beeinträchtigen. Es können aber die Bezeichnungen und Bezugszeichen der Fig. 2 eins zu eins übernommen werden. Eine Gerade ergibt sich dann, wenn die Bedingung RR = RG/2, bzw. RG/RR = 2 erfüllt ist. Anhand der Figuren 3A bis 3H ist zu erkennen, dass der erzeugende Punkt U sich ausgehend von der Abbildung in Fig. 3A ($\lambda = 0°$) entlang der x-Achse von der Koordinatenposition [RG, 0] nach links zur Koordinatenposition [-RG, 0] verschiebt. In Fig. 3E ($\lambda = 180°$) ist diese Koordinatenposition [-RG, 0] erreicht. Nun rollt der Rollkreis RK durch die unteren beiden Quadranten des x-y-Koordinatensystems und der Punkt U bewegt sich von der Koordinatenposition [-RG, 0] zurück zur Koordinatenposition [RG, 0]. Die Gerade HY ist eine Strecke, die sich in den Figuren entlang der x-Achse von [RG, 0] bis [-RG, 0] erstreckt.

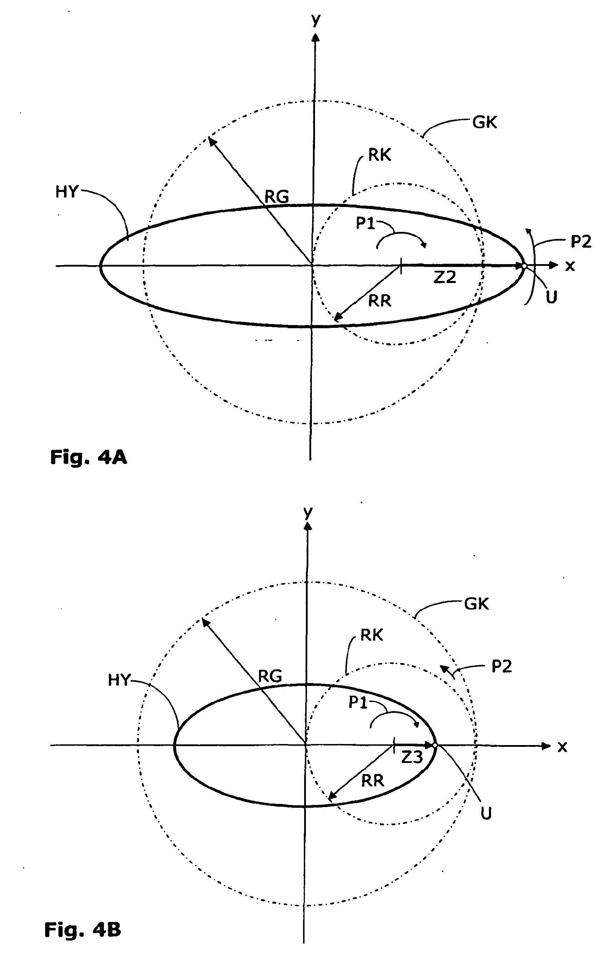

Anhand der gezeigten Abbildungen kann man auch Sonderformen der Hypozykloide erklären. Diese Sonderformen werden wie folgt erzeugt. Wenn der erzeugende Punkt U innerhalb oder außerhalb des Rollkreises RK liegt, dann spricht man entweder von einer verkürzten Hypozykloide oder entsprechend von einer verlängerten Hypozykloide. Der Abstand zwischen dem Zentrum M (siehe Fig. 2) des Rollkreises RK und der Position des erzeugenden Punkts U wird durch den Parameter c beschrieben. c < RR erzeugt also eine verkürzte Hypozykloide und c > RR erzeugt eine verlängerte Hypozykloide. In Fig. 4A ist eine verlängerte Hypozykloide mit c = 1,5 RR gezeigt. Der Zeiger Z2 hat also die Länge c = 1,5 RR (die Größe c entspricht dem Messerkopfnennradius $r_c$ in Fig. 1B). Der Messerkopfnennradius $r_c$ beträgt hier also $r_c$ = 1,5 RR. In Fig. 4B ist eine verkürzte Hypozykloide mit c = 0,5 RR gezeigt. Der Zeiger Z3 hat also die Länge c = 0,5 RR. Der Messerkopfnennradius $r_c$ beträgt hier also $r_c$ = 0,5 RR. Es wird jeweils eine Ellipse als Hypozykloide HY erzeugt, deren Parameterdarstellung als Funktion vom Winkel $\lambda$ in dem x-y-Koordinatensystem wie folgt lautet:

$$x = \left( \frac{RG}{2} + c \right) \cos\left( \frac{\lambda}{2} \right) \qquad\qquad (3)$$

$$y = \left( \frac{RG}{2} - c \right) \sin\left( \frac{\lambda}{2} \right) \qquad\qquad (4)$$

Falls c=RR und RR = RG/2 gilt, so erhält man die gerade Hypozykloide als Sonderfall, wie bereits beschrieben.

Bei den (Stirn)Messerköpfen, die zur Herstellung von Kegelrädern eingesetzt werden, unterscheidet man zwischen sogenannten Stabmesserköpfen und Profilmesserköpfen. Ein Stabmesserkopf wird mit vielen Stabmessern (z.B. vierzig) bestückt, wobei jedes Stabmesser einen Schaft und einen Kopfbereich aufweist. Durch Schleifen des Stabmessers kann dem Kopfbereich die gewünschte Form und Position gegeben werden. Stabmesserköpfe sind gegenüber Profilmesserköpfen, die weniger Messer enthalten produktiver und die Stabmesser sind umprofilierbar. Ein Profilmesserkopf ist hingegen mit hinterschliffenen Messern ausgestattet. Diese Formmesser (auch Profilmesser genannt) behalten beim Nachschleifen an der Spanfläche ihre Profilform. Es ist ein Vorteil des Kegelradfräsens mit Profilmessern, dass keine spezielle Schleifmaschine für das Nachschleifen dieser Formmesser erforderlich ist. Das bekannte Zyklo-Palloid®-Verfahren nutzt zum Beispiel derartige Profilmesser zum Herstellen von Spiralkegelrädern.

Es ist bekannt, dass man ein Tellerrad nicht nur durch Wälzen sondern auch durch das Tauchen (auch Einstechen genannt) herstellen kann. Man spricht in diesem Fall von einem Formverfahren oder auch von einer FORMATE®-Verzahnung (FORMATE® ist eine Marke der Firma The Gleason Works, Rochester, NY, USA). Diese Vorgehensweise spart Zeit bei der Fertigung des Tellerrades. Da keine Wälzbewegung erfolgt, bildet sich das Werkzeugprofil in der Tellerradlücke ab. Das so gefertigte Tellerrad besitzt dann das Profil des Werkzeugs, d.h. die Profilkrümmung der Zahnflanken ergibt sich direkt aus der Werkzeugprofilform des ersten Werkzeugs. Das entsprechende konjugierte Ritzel eines Kegelradpaares muss dann aber in einem modifizierten Wälzverfahren hergestellt werden, damit gewälztes Ritzel und getauchtes Tellerrad korrekt miteinander laufen können. Details hierzu sind z.B. dem Buch "Kegelräder; Grundlagen, Anwendungen", von J. Klingelnberg, Springer Verlag, 2008, Seite 16 - 17 zu entnehmen. Aus dem US-Patent US 1,982,036 ist ein Verfahren zur Herstellung eines getauchten Tellerrades und eines passenden gewälzten Ritzels bekannt, wobei beide Kegelräder konisch zulaufende ("tapered") Zähne aufweisen. Details zu dem erwähnten Verfahren sind den US-Patenten US 2,105,104 und US 2,310,484 zu entnehmen. In diesen US-Patenten geht es um die Herstellung bogenverzahnter, respektive spiralverzahnter Kegelräder.

Gemäss Erfindung geht es um das Fräsen von Kegelrädern mit Hypozykloidverzahnung geradverzahnter Kegelräder.

Die derzeit beim Fräsen geradverzahnter Kegelräder verwendeten Verfahren sind das Wälzfräsen (Namen bekannter Wälzfräsverfahren: Coniflex®, Konvoid und Sferoid™) und das Räumen (auch als Revacycle®-Verfahren bekannt) (Coniflex® und Revacycle® sind Marken der Firma The Gleason Works, Rochester, NY, USA). Es werden beim Wälzfräsen zwei gleichgroße scheibenförmige Messerköpfe zum Einsatz gebracht, bei denen die Messer am äusseren Umfang radial nach aussen zeigen. Die Achsen der beiden Messerköpfe sind zueinander geneigt, so dass an der engsten Stelle die Messer des einen Messerkopfs zwischen die Messer des anderen greifen können. So wird ein Messerkopf für die Linksflanken und eine Messerkopf für die Rechtsflanken eingesetzt wird. Beim Wälzfräsen geradverzahnter Kegelräder handelt es sich um ein Einzelteilverfahren, bei dem Tellerrad und Kegelradritzel gewälzt werden. Das Räumverfahren ist auch ein Einzelteilverfahren bei dem aber die Zahnflanken von Tellerrad und Kegelritzel nicht wie bei Wälzfräsen durch Hüllschnitte erzeugt werden. Vielmehr entsprechen die Messerprofile beim Räumen exakt der Form des endgültigen Lückenprofils des Kegelrads. Das Räumverfahren ist produktiver als das Wälzfräsen im Einzelteilverfahren, hat aber den Nachteil, dass man für fast jedes Kegelrad (Übersetzungsverhältnis) einen speziellen scheibenförmigen Räummesserkopf mit einer Vielzahl verschiedener Formmesser am Umfang braucht.

Der Zeitaufwand für das wälzende Erzeugen von Kegelradpaaren ist teilweise relativ gross. Diese Feststellung gilt auch für Kegelräder mit Hypozykloidverzahnung.

Von daher liegt der Erfindung die Aufgabe zugrunde, eine Lösung bereit zu stellen, die es ermöglicht geradverzahnte Kegelräder schnell und produktiv zu fertigen. Insbesondere geht es auch um die Fertigung von Kegelradpaaren aus geradverzahntem Ritzel und geradverzahntem Tellerrad.

Der Erfindung liegt unter anderem die Feststellung zugrunde, dass es beim konventionellen Wälzen eines Tellerrads eine Bearbeitungsphase geben kann, während der das Fräswerkzeug kaum Material am Tellerradrohling abhebt. Während dieser Bearbeitungsphase arbeitet das Fräswerkzeug nicht produktiv. Es hat sich gezeigt, dass man die Bearbeitungszeit eines Tellerrads verkürzen kann, indem man sich auf reines Tauchen beschränkt. Dadurch ergibt sich aber ein leicht anderes Zahnprofil der Zähne des Tellerrades. Daher muss das zugehörige Ritzel mit einem entsprechend angepassten Wälzverfahren erzeugt werden, damit das getauchte Tellerrad und das gewälzte Ritzel korrekt miteinander laufen können, respektive ein funktionsfähiges Kegelradpaar bilden. Das angepasste Wälzverfahren wird hier auch als modifiziertes Wälzverfahren bezeichnet.

Die Aufgabe wird erfindungsgemäß durch ein Verfahren gemäß Patentanspruch 1 gelöst. Vorteilhafte Ausgestaltungen der Erfindung bilden die Gegenstände der abhängigen Patentansprüche.

Bei dem erfinderischen Verfahren wird das Tellerrad getaucht, während das Ritzel gewälzt wird. Der Wälzprozess des Ritzels ist gegenüber einem Ritzel einer vorbekannten Paarung mit gewälztem Tellerrad modifiziert. Daher ist in diesem Zusammenhang von einem modifizierten Wälzverfahren die Rede.

Ein Verfahren zum reinen Tauchen des Tellerrades und zum modifizierten Wälzen des zugehörigen Ritzels hat sich als besonders effektiv und schnell erweisen.

Es wird als ein Vorteil der Erfindung angesehen, dass man mit dem vorliegenden Verfahren geradverzahnte Kegelräder schnell und effizient auf mehrachsigen Kegelradverzahnmaschinen herstellen kann. Es besteht daher kein Bedarf auf Spezialmaschinen für die Herstellung der Geradverzahnungen zurückzugreifen.

Es ist ein Vorteil der Erfindung, dass es bei Bedarf mit dem erfindungsgemässen Formverfahren möglich ist bei konstanter Zahnhöhe konjugierte Verzahnungen zu erzeugen.

Es können auf den gleichen Verzahnmaschinen auch Spiralkegelradpaarungen als auch gewälzte Geradzahnkegelradpaarungen hergestellt werden. Das Verfahren vereint hohe Flexibilität mit hoher Produktivität.


ZEICHNUNGEN

Die Figuren werden zusammenhängend und übergreifend beschrieben. Ausführungsbeispiele der Erfindung werden im Folgenden unter Bezugnahme auf die Zeichnungen näher beschrieben. Es zeigen:

| FIG. 1A | eine schematische Illustration des Einzelteilverfahrens; |
|---|---|
| FIG. 1B | eine schematische Illustration des kontinuierlichen Teilverfahrens, wobei hier eine Epizykloide erzeugt wird; |
| FIG. 1C | eine schematische Illustration des kontinuierlichen Teilverfahrens, wobei hier eine Hypozykloide erzeugt wird; |
| FIG. 2 | eine schematische Illustration zur Erzeugung einer Hypozykloide; |
| FIG. 3A-3H | eine schematische, schrittweise Illustration der Erzeugung einer geradlinigen Hypozykloide; |
| FIG. 4A | eine schematische Illustration zur Erzeugung einer elliptischen Hypozykloide (verlängerte Hypozykloide); |
| FIG. 4B | eine schematische Illustration zur Erzeugung einer elliptischen Hypozykloide (verkürzte Hypozykloide); |
| FIG. 5 | eine schematische Illustration eines Kegelrads mit Geradverzahnung, wobei nur ein Teil der Zähne dargestellt sind; |
| FIG. 6 | eine schematische Perspektivansicht eines Kegelradritzels mit Geradverzahnung; |
| FIG. 7 | eine perspektivische Ansicht einer Kegelradverzahnmaschine, |
| FIG. 8 | eine schematische Illustration eines Kegelradpaares mit einem Ritzel mit Geradverzahnung und mit einem Tellerrad mit Geradverzahnung, |
| FIG. 9A | eine schematische Darstellung des erfindungsgemässen Formverfahrens mit getauchtem Tellerrad, das durch ein kegliges Erzeugungsrad definiert wird; |
| FIG. 9B | eine schematische Darstellung des Formverfahrens mit gewälztem Ritzel, das durch ein kegliges Erzeugungsrad definiert wird; |
| FIG. 10A | eine schematische Darstellung verschiedener Profilschnitte eines konventionell gewälzten Ritzels; |
| FIG. 10B | eine schematische Darstellung verschiedener Profilschnitte eines konventionell gewälzten Tellerrads; |
| FIG. 11A | eine schematische Darstellung verschiedener Profilschnitte eines modifiziert gewälzten Ritzels, gemäß Erfindung; |
| FIG. 11B | eine schematische Darstellung verschiedenere Profilschnitte eines getauchten Tellerrads, gemäß Erfindung; |
| FIG. 12 | eine schematische Perspektivdarstellung eines getauchten Tellerrads, eines modifiziert gewälzten Ritzels und eines entsprechenden kegligen Erzeugungsrades. |


Detaillierte Beschreibung

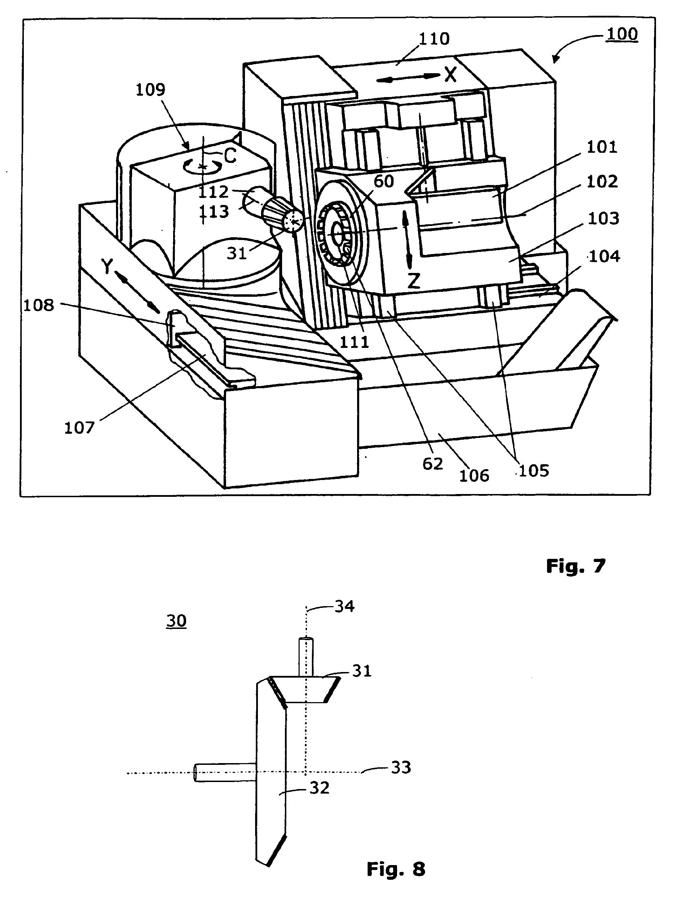

Es geht hier um das Erzeugen von Kegelrädern 31, 32 (siehe Fig. 8) mit hypozykloidischer Geradverzahnung. Unter hypozykloidischer Verzahnung ist eine Verzahnung mit einer Flankenlängslinie zu verstehen, die durch eine Hypozykloide definiert ist. Unter "hypozykloidischer Geradverzahnung" ist gemäß Erfindung eine Verzahnung mit einer Flankenlängslinie zu verstehen, die entweder einer Geraden entspricht oder die einer Geraden stark angenähert ist. Als angenäherte Gerade wird hier gemäß Erfindung eine gestreckte oder verkürzte Hypozykloide verstanden, deren Krümmungsradius größer ist als 15* Zahnbreite d.h. deren Krümmung entsprechend klein ist. Ein solcher Krümmungsradius ist bei den üblichen Zahnbreiten kaum erkenn- oder wahrnehmbar und wird daher im Zusammenhang mit der vorliegenden Erfindung als hypozykloidische Geradverzahnung betrachtet.

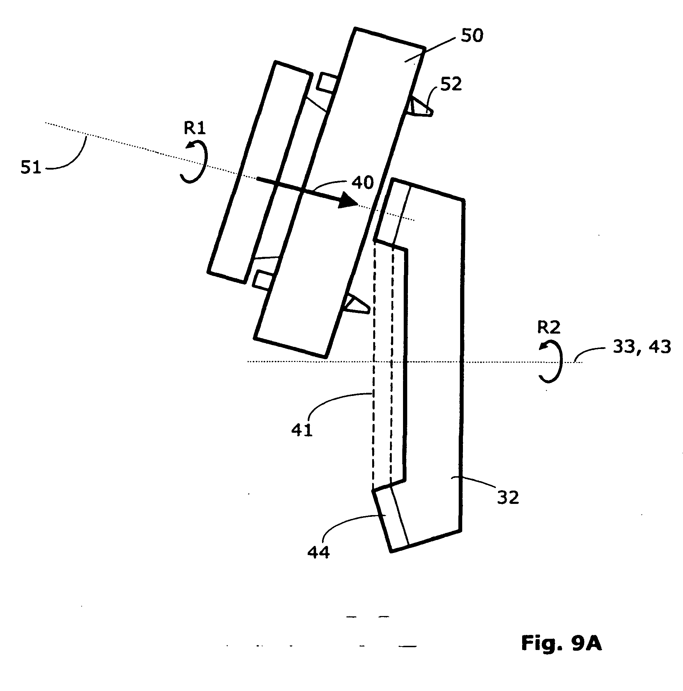

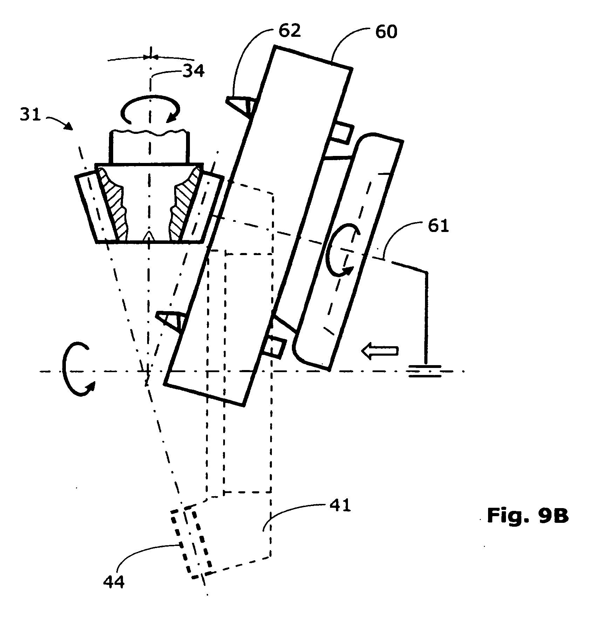

Gemäß Erfindung wird das Tellerrad 32 durch Tauchen, d.h. durch eine Einstechbewegung 40 eines ersten Fräswerkzeugs 50 in Bezug auf einen Tellerradrohling gefertigt. In Fig. 9A sind Details in einer schematischen Darstellung gezeigt. Das kegelige Erzeugungsrad 41 ist in Fig. 9A in gestrichelter Form dargestellt. Die Wälzwiegenachse 43 entspricht der Planradachse des Erzeugungsrads 41. Die Messerkopfachse des Fräswerkzeugs 50 ist mit dem Bezugszeichen 51 gekennzeichnet. Das Fräswerkzeug 50 trägt hier mehrere Messer 52 (z.B. Stabmesser). Die Zähne 44 des kegelförmigen virtuellen Erzeugungsrades 41 werden im Eingriffsbereich durch die Schneiden oder Schneidflanken der Messer 52 des ersten Fräsmesserkopfs 50 dargestellt, respektive abgebildet.

Der entsprechende Tauchprozess zeichnet sich dadurch aus, dass z.B. die Tiefenposition als Vorschubachse für die Einstechbewegung 40 verwendet wird, wie in Fig. 9A angedeutet. Der Wälzwiegenwinkel ist konstant, da es sich ja um einen Prozess ohne Wälzbewegung handelt. Die anderen Größen, die einen Bezug zwischen dem Fräsmesserkopf 50 und dem Tellerradrohling herstellen, können beim Tauchprozess konstant sein Falls man die Tellerradflankengeometrie modifizieren möchte, können die anderen Werte auch veränderlich vorgegeben werden.

Beim Tauchen (auch Einstechen genannt) handelt es sich um ein Formverfahren. Das Tauchen spart Zeit bei der Fertigung des Tellerrades 32. Da keine Wälzbewegung erfolgt, bildet sich das Werkzeugprofil des ersten Fräswerkzeugs 50 in der Tellerradlücke ab. Das so gefertigte Tellerrad 32 besitzt dann das Profil des Werkzeugs 50. D.h. die Profilkrümmung der Zahnflanken des Tellerrads 32 ergibt sich direkt aus der Werkzeugprofilform des Werkzeugs 50. Vorzugsweise hat die Profilkrümmung in Profilrichtung betrachtet eine geringe Krümmung.

Besonders bevorzugt ist eine Ausführungsform bei welcher die Zahnflanken in Profilrichtung betrachtet einen Krümmungsradius aufweisen, der grösser ist als 20* das mittlere Normalmodul..

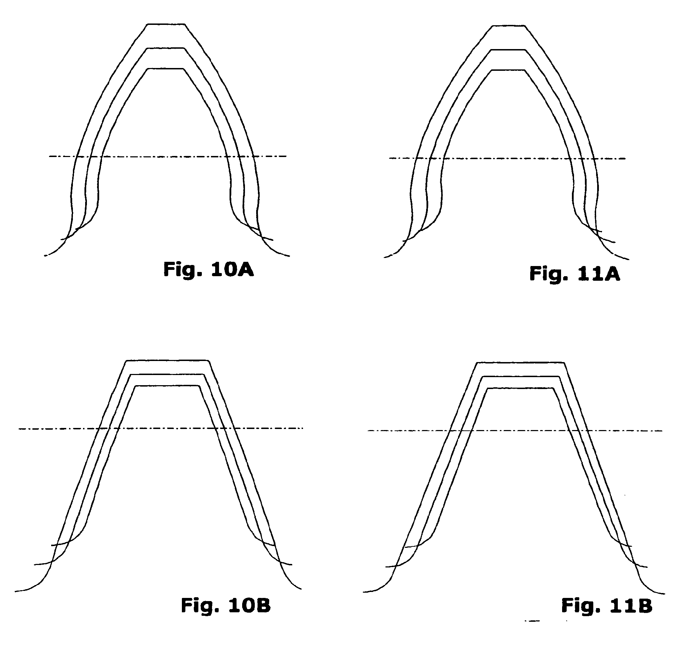

Im Vergleich konventionell durch Wälzen gefertigter Tellerräder und gemäss Erfindung durch Tauchen gefertigter Tellerräder 32 kann folgende Aussage getroffen werden. Je stärker das gewälzte Tellerradprofil gekrümmt ist umso stärker weicht das nur getauchte Tellerrad 32 von diesem Tellerradprofil ab und umso mehr muss das entsprechende Ritzel 31 modifiziert werden, damit es zusammen mit dem getauchten Tellerrad 32 ein gut funktionsfähiges Kegelradpaar 30 bilden kann. Daraus ergibt sich in etwa ein Übersetzungsverhältnis, ab dem es sinnvoll ist, das Tellerrad 32 mit dem erfindungsgemässen Verfahren nur zu tauchen. Das Beispiel in den Figuren 11A und 11B zeigt eine Verzahnung mit 13:47, d.h. das Übersetzungsverhältnis ist i=3,61538. Die Erfindung lässt sich besonders vorteilhaft anwenden auf Kegelradpaare 30 mit getauchtem Tellerrad 32 und modifiziert gewälztem Ritzel 31 ab einem Übersetzungsverhältnis von i > 2 und besonders vorzugsweise ab einem Übersetzungsverhältnis von i > 2,5.

Gemäß Erfindung wird das Tellerrad 32 wie folgt durch das Fräsen von Zahnlücken gefertigt. Es kommt zum Fräsen der Zahnlücken des Tellerrads 32 der erste Fräsmesserkopf 50 (hier auch allgemeiner als erstes Werkzeug bezeichnet) zum Einsatz, der um eine Werkzeugachse (Messerkopfachse 51 genannt) in Rotation R1 versetzt wird. Das erste Werkzeug 50 führt eine reine Tauchbewegung 40 beim Fräsen der Zahnlücken an dem zu bearbeitenden Tellerradrohling 32 aus, während der Tellerradrohling 32 kontinuierlich um eine Werkstückachse (auch Kegelradachse des Tellerrades 33 genannt) gedreht wird (Rotation R2 in Fig. 9A). Das erste Werkzeug 50 ist, wie erwähnt, durch ein kegelförmiges virtuelles Erzeugungsrad 41 definiert, das der invertierten Kegelform des zu fertigenden Tellerrads 32 entspricht.

Der Tauchvorschub definiert die Geschwindigkeit, mit der das erste Fräswerkzeug 50 in Richtung seiner Messerkopfachse 51 in den Tellerradrohling 32 eintaucht.

Damit an dem Tellerradrohling 32 Zahnlücken mit Zahnflanken gefräst werden, die in Zahnlängsrichtung (d.h. in Richtung der Flankenlängslinie) betrachtet keine Krümmung oder nur eine geringe Krümmung aufweisen, setzt die Erfindung auf das Erzeugen hypozykloidischer Geradverzahnungen, nach dem in den Figuren 3A bis 3H gezeigten und im Zusammenhang mit diesen Figuren beschriebenen Prinzip. Die Hypozykloide ist die Kurve in Zahnlängsrichtung (auf dem virtuellen Erzeugungsrad 41) und somit ergibt sich eine Gerade oder eine Kurve mit geringer Krümmung in Zahnlängsrichtung. Beim Tellerrad einer gewälzten Kegelradpaarung ergibt sich ab einem bestimmten Übersetzungsverhältnis (<2,5), wenn gerade oder nur gering gekrümmte Werkzeugprofile verwendet werden, eine geringe Profilkrümmung. Dies ermöglicht ein reines Formen des Tellerrades 32, ohne dass das zugehörige Ritzel 31 zu stark modifiziert werden muss. Beim Tauchen mit den genannten Werkzeugprofilen ergibt sich dann ein Profil mit keiner oder nur geringer Krümmung.

Das Fräsen der Zahnlücken des Ritzels 31 erfolgt mit einem zweiten Fräsmesserkopf 60 (hier auch allgemeiner als zweites Werkzeug bezeichnet), der um eine Werkzeugachse 61 in Rotation versetzt wird und der eine Wälzbewegung gemäss einem modifizierten Wälzverfahren ausführt. Der Ritzelrohling 31 wird während dem Fräsen kontinuierlich um seine Werkstückachse 34 (Ritzelachse) gedreht. Beim modifizierten Wälzverfahren führen Wälzwiege und der Ritzelrohling 32 eine gekoppelte Bewegung aus, woraus als Ergebnis ein gekrümmtes Flankenprofil des Ritzels 32 entsteht. Die Wälzwiege ist nur eine Achse eines Rechenmodells, respektive einer virtuellen Verzahnmaschine. An der Maschine 100 ist sie nicht real vorhanden.

Der zweite Fräsmesserkopf 60 ist durch das kegelförmige virtuelle Erzeugungsrad 41 so definiert, dass an dem Ritzelrohling 31 Zahnlücken mit Zahnflanken gefräst werden, die in Profilrichtung betrachtet eine deutliche Krümmung aufweisen, um mit dem getauchten Tellerrad 32 mit geringer Profilkrümmung korrekt laufen zu können.

Wenn man beim Tauchen des Tellerrads 32 am ersten Werkzeug 50 gerade Werkzeugprofile verwendet, so erhält man ein gerades Zahnhöhenprofil. Es können gemäss Erfindung aber auch zur Erzeugung einer Höhenballigkeit am getauchten Tellerrad 32 leicht gekrümmte Werkzeugprofile am ersten Werkzeug 50 eingesetzt werden. Das so erzeugte Tellerradzahnprofil ist dann auch leicht gekrümmt. Man kann bei Bedarf das Werkzeugprofil des ersten Werkzeugs 50 aber auch stark krümmen und so am getauchten Tellerrad 32 eine ähnliche Krümmung wie beim konventionell gewälzten Tellerrad erreichen. Das Profil des zweiten Werkzeugs 60 des Ritzels 31 wird dann in die andere Richtung gekrümmt (konkav), um für die notwendige Anpassung zu sorgen.

Gemäss einer anderen Ausführungsform kann aber auch mit einem geraden Werkzeugprofil des ersten Werkzeugs 50 gearbeitet werden. In diesem Fall kann die erwünschte Höhenballigkeit durch die Fräskinematik der Maschine 100 erzeugt werden. Oder das Werkzeugprofil kann eine leichte Krümmung zur Erzeugung einer Höhenballigkeit der Zahnflanken aufweisen. In diesen beiden Fällen ist der Krümmungsradius des Tellerradhöhenprofils grösser als das 20fache der Zahnhöhe.

Das entsprechende Ritzel 31 eines Kegelradpaares 30 (siehe Fig. 8) muss, wie beschrieben, in einem modifizierten Wälzverfahren hergestellt werden, damit gewälztes Ritzel 31 und getauchtes Tellerrad 32 korrekt miteinander laufen können. Details hierzu sind z.B. dem Buch "Kegelräder; Grundlagen, Anwendungen", von J. Klingelnberg, Springer Verlag, 2008, Seite 16 - 17 zu entnehmen.

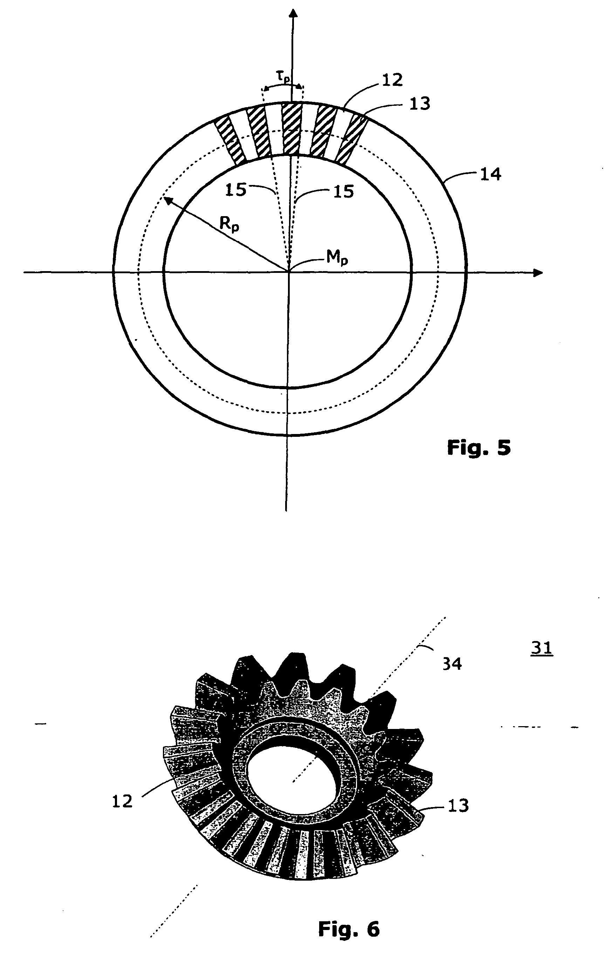

In Fig. 5 ist eine schematische Illustration eines Planrades 14 mit hypozykloidischer Geradverzahnung gezeigt, wobei nur ein Teil der Zähne 13 (im vorliegenden Fall fünf Zähne) schraffiert dargestellt sind. Es gilt für ein solches Planrad 14 die folgende Gleichung (1):

$$\tau_p = \frac{m_P \cdot \pi}{R_P} = \frac{2 \cdot \pi}{z_P} \qquad\qquad (1)$$

Anhand dieser Gleichung (1) kann der Planrad-Teilungswinkel $\tau_P$ berechnet werden, wenn man (Planrad-) Modul $m_P$ und Planrad-Halbmesser $R_p$, oder wenn man die Planradzähnezahl $z_p$ kennt. In Fig. 5 ist zu erkennen, dass bei einem geradverzahnten Planrad 14 die Bezugsflankenlinien 15 (Flankenlinie) Geraden sind, die meist radial durch die Planradmitte $M_P$ gehen. Alle entsprechenden Formeln sind einschlägig bekannt. Details können zum Beispiel dem Buch "Kegelräder; Grundlagen, Anwendungen", Jan Klingelnberg, Springer Verlag, 2008, entnommen werden, wo die entsprechenden Formeln auf den Seiten 39 ff dargestellt sind.

Anhand dieser Erkenntnisse lassen sich erste und zweite Fräsmesserköpfe 50, 60 berechnen und herstellen, die dazu verwendet werden können, um Kegelräder mit geradliniger Hypoidverzahnung zu erzeugen.

FIG. 6 zeigt das Beispiel eines erfindungsgemässen Kegelradritzels 31 mit Geradverzahnung in einer schematischen Perspektivansicht. In dieser Figur sind die Zähne 13 und Zahnlücken 12 zu erkennen.

Fig. 7 zeigt in perspektivischer Darstellung den Grundaufbau einer entsprechenden CNC-Maschine 100 (auch Kegelrad-Verzahnmaschine genannt) zum Verzahnen von Kegelrädern, hier von Kegelradritzeln (z.B. das Ritzel 31) mit Hypoidverzahnung und von Tellerrädern 32 mit gerader oder quasi-gerader Hypoidverzahnung, gemäß Erfindung.

Die CNC-Maschine 100 kann wie folgt aufgebaut sein. Auf einem Maschinenbett 106 ist ein Maschinengehäuse 110 entlang einer geraden Koordinatenachse X (1. Achse) horizontal und linear geführt. Ein erster Schlitten 103 ist auf einer Führung 105, die an einer Seitenfläche des Maschinengehäuses 110 angebracht ist, entlang einer geraden Koordinatenachse Z (2. Achse) mittels eines Spindeltriebs 101 in der Höhe verfahrbar. Auf dem Maschinenbett 104 ist ein Werkstückspindelträger mit einem zweiten Schlitten 108 entlang einer geraden Koordinatenachse Y (3. Achse), die bei der in Fig. 7 gezeigten CNC-Maschine 100 zur X-Achse rechtwinkelig ist, auf einer Führung 107 horizontal und linear geführt. Auf dem Schlitten 108 befindet sich eine erste Schwenkvorrichtung 109 mit vertikaler Achse C (4. Achse). Die Führung 105 des ersten Schlittens 103 und die Z-Achse sind bei der in Fig. 7 gezeigten CNC-Maschine 100 gegen die Vertikale geneigt.

Der erste Schlitten 103 trägt eine um eine Werkzeugspindelachse 102 (5. Achse) drehbar gelagerte Werkzeugspindel 111. Die Werkzeugspindel 111 trägt ein (Fräs-)Werkzeug. Beim modifizierten Wälzen trägt die Werkzeugspindel 111 hier das zweite Fräswerkzeug 60 (beispielsweise einen Messerkopf 60 mit mehreren Stabmessern 62). Beim Tauchen trägt die Werkzeugspindel 111 hier das erste Fräswerkzeug 50 (beispielsweise einen Messerkopf 50 mit mehreren Messern 52). Durch den zweiten Schlitten 108 und durch die erste Schwenkvorrichtung 109 ist eine Werkstückspindel 112 auf dem Maschinenbett 106 horizontal geführt und linear verschiebbar bzw. schwenkbar. Die erste Schwenkvorrichtung 109 trägt die Werkstückspindel 112, die um eine Werkstückspindelachse 113 (6. Achse) drehbar ist. Die Werkstückspindel 112 trägt einen Rohling 31 (oder 32). Im vorliegenden Beispiel wird ein geradverzahntes Ritzelrohling 31 in der Maschine 100 bearbeitet. Die erste Schwenkvorrichtung 109 ist um die C-Achse horizontal geführt schwenkbar, um den Rohling 31 (oder 32) in eine Bearbeitungsposition zu schwenken. Zum Aufspannen des Rohlings 31 (oder 32) kann die Werkstückspindel 112 mit einer Spannvorrichtung versehen sein.

Gemäß Erfindung geht es also um ein Fräsverfahren zur Herstellung von Kegelrädern 31 und 32 mit geradliniger Hypozykloidverzahnung im kontinuierlichen Formverfahren. Es kommt ein Fräswerkzeug (z.B. ein Messerkopf 50 oder 60 zum Einsatz), der sich zum Kegelrad 31, 32 in einer Gleichlaufbewegung befindet (analog zu Fig. 1C). Das Fräswerkzeug 50 oder 60 weist einen Messerkopfnennradius $r_c$ auf.

Im besagten Beispiel ergeben sich mit einem solchen Fräswerkzeug 50 oder 60 Kegelräder 31, 32 mit Zähnen, die hypozykloidische Flankenlängslinien haben.

Beim Fräsen des Tellerrads 32 wird gemäss Erfindung eine Hypozykloide als Flankenlängslinie erzeugt, indem die Drehung des ersten Werkzeugs 50 um seine Werkzeugachse 51 und die Drehung des Tellerradrohlings 32 um seine Werkstückachse 33 gekoppelt sind. Die Maschine 100 sorgt für die erforderliche Kopplung der Bewegungsabläufe. Vorzugsweise ist als Teil der Maschine 100 eine Steuerung zur Kopplung der entsprechenden Achsbewegungen vorgesehen.

Bei den erwähnten Achsen, soweit sie nicht in einem unmittelbaren Zusammenhang stehen mit der Kegelradverzahnmaschine 100, die in Fig. 7 gezeigt ist, handelt es sich um die Achsen einer sogenannten virtuellen Verzahnmaschine. Eine Verzahnmaschine (z.B. die Kegelradverzahnmaschine 100) ist stets so aufgebaut, dass sie mit dem Werkzeug 50 oder 60 und dem Rohling 31 oder 32 genau die Relativbewegungen erzwingt, die das virtuelle keglige Erzeugungsrad 41 im Eingriff mit dem zu fertigenden Kegelrad 31, 32 ausführt. Dabei wird ein Zahn 44 des Erzeugungsrades 41 durch das Profil des Werkzeugs 50, 60, respektive der Schneiden des Werkzeugs 50, 60 ersetzt.

Vorzugsweise wird ein geradverzahntes Kegelrad 31, 32 mit Hypozykloidverzahnung erzeugt, indem gemäß Erfindung das Verhältnis von Grundkreisradius RG des Grundkreises GK zu Rollkreisradius RR mit RG/RR = 2 gewählt. In diesem Fall werden Kegelräder mit geradverzahnter Hypozykloide erzeugt. Der Messerkopfradius $r_c$ der Fräswerkzeuge beträgt hier jeweils $r_c$ = RR.

Wenn hier jedoch RG/RR ≠ 2 ist, und das Verhältnis von RG/RR nur geringfügig von 2 abweicht, dann ergibt sich eine hypozykloidische Flankenlängslinie. Diese Flankenlängsline wird hier als nahezu gerade betrachtet (d.h. sie weist eine geringe Krümmung auf) wenn ihr Krümmungsradius größer ist als 15* die Zahnbreite. In diesem Fall gilt also, dass der Grundkreisradius RG des Grundkreises GK ungefähr doppelt so groß ist wie der Rollkreisradius RR. Vorzugsweise gilt, dass RG/RR = 2 ± 5%. Der Messerkopfradius $r_c$ der Fräswerkzeuge ist hier jeweils etwas größer oder etwas kleiner als der Rollkreisradius RR (siehe auch Fig. 4A und 4B).

FIG. 10A zeigt eine schematische Darstellung der Verzahnung eines konventionell gewälzten Ritzels und FIG. 10B zeigt eine schematische Darstellung der Verzahnung eines konventionell gewälzten Tellerrads. FIG. 11A zeigt eine schematische Darstellung einer korrespondierenden Verzahnung eines modifiziert gewälzten Ritzels 31, gemäß Erfindung und FIG. 11B zeigt eine schematische Darstellung der Verzahnung eines getauchten Tellerrads 32, gemäß Erfindung. Es sind in diesen Abbildungen jeweils die Profile eines Zahnes an der Ferse, an der Zahnmitte und an der Zehe übereinander gelegt. Das Profil des gewälzten Tellerrades ist leicht gekrümmt wohingegen das Profil des getauchten Tellerrades 32 gerade ist. Der Unterschied zwischen dem gewälzten und dem getauchten Tellerrad 32 ist gering, da das Übersetzungsverhältnis i=3,615 beträgt, d.h. da das Übersetzungsverhältnis i größer ist als 2, wie weiter oben gefordert. Das Profil des Ritzels 31 für ein getauchtes Tellerrad 32 ist stärker gekrümmt als das Profil eines Ritzels für ein gewälztes Tellerrad. Das Profil des Ritzels 31 für ein getauchtes Tellerrad 32 hat daher eine etwas geringere Zahnfußdicke und Zahnkopfdicke.

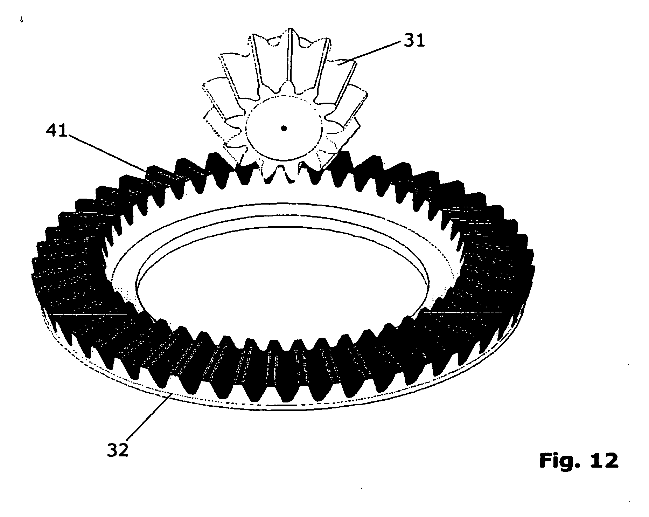

Abschließend wird zur weiteren Erläuterung der Erfindung auf Fig. 12 Bezug genommen. Es kommt ein kegliges Erzeugerrad 41 zum Einsatz, das mit dem Tellerrad 32 übereinstimmt. Das Ritzel 31 wird erzeugt in dem es mit dem kegeligen Erzeugerrad 41 (das dem Tellerrad 32 entspricht) abwälzt. Der zweite Messerkopf 60 (zweites Werkzeug) stellt in dem Bereich in dem er mit dem Ritzel 32 in Berührung kommt das keglige Erzeugerrad 41 dar. Das Tellerrad 32 wird erzeugt in dem das keglige Erzeugerrad 41 (als Negativform des Tellerrades 32) in das Tellerrad 32 eintaucht. Der erste Messerkopf 50 (erstes Werkzeug) stellt in dem Bereich in dem er mit dem Tellerrad 32 in Berührung kommt das keglige Erzeugerrad 41 (als Negativform des Tellerrades 32 dar). Das Erzeugerrad 41 ist für die gewälzte/getauchte Paarung eine unendlich dünne Folie und kommt einmal mit der einen Seite der Folie mit dem Ritzel 31 und mit der anderen Seite der Folie mit dem Tellerrad 32 in Berührung. In Fig. 12 ist die dünne Folie, die das keglige Erzeugerrad 41 repräsentiert, in grau dargestellt.

Bei dem erfindungsgemässen Schneidprozess (Fräsen) kann es sich sowohl um einen Zweiflankenschnitt oder um einen Einflankenschnitt handeln. Beim Zweiflankenschnitt werden die rechte und linke Flanke gleichzeitig mit einem Werkzeug 50, 60 und einer Maschineneinstellung erzeugt. Beim Einflankenschnitt werden die rechte und linke Flanke mit unterschiedlichen Maschineneinstellungen getrennt erzeugt. Bei letzterem ist es möglich, dass dies mit dem gleichen Messerkopf 50, 60 oder mit zwei unterschiedlichen Messerköpfen geschieht.

Bezugszeichenliste

| | |
|---|---|
| Kegelradritzel | 11 |
| Zahnlücken | 12 |
| Zähne | 13 |
| Planrad | 14 |
| Bezugsflankenlinien | 15 |
| Messerkopf | 20 |
| Messer | 21 |
| Messer | 23 |
| | |
| Kegelradpaar | 30 |
| Ritzel bzw. Ritzelrohling | 31 |
| Tellerrad bzw. Tellerradrohling | 32 |
| Kegelradachse des Tellerrades | 33 |
| Kegelradachse des Ritzels | 34 |
| | |
| Einstechbewegung | 40 |
| Kegliges Erzeugungsrad (Planrad) | 41 |
| Wälzwiegenachse | 43 |
| Zähne des kegelförmigen virtuellen Erzeugungsrades 41 | 44 |
| | |
| Erstes Werkzeug (Fräswerkzeug) | 50 |
| Messerkopfachse des Fräswerkzeugs 50 | 51 |
| (Stab-)Messer | 52 |
| | |
| zweites Werkzeug (Fräswerkzeug) | 60 |
| Messerkopfachse des Fräswerkzeugs 60 | 61 |
| Stabmesser | 62 |
| | |
| CNC-Maschine | 100 |
| Spindeltrieb | 101 |
| Werkzeugspindelachse | 102 |
| erster Schlitten | 103 |
| Maschinenbett | 104 |
| Führung | 105 |
| Maschinenbett | 106 |
| Führung | 107 |
| zweiter Schlitten | 108 |
| Schwenkvorrichtung | 109 |
| Maschinengehäuse | 110 |
| Werkzeugspindel | 111 |
| Werkstückspindel | 112 |
| Werkstückspindelachse = Kegelradachse des Ritzels oder des Tellerrads | 113 |
| | |
| 1. Teilungsdrehung | A |
| 2. Teilungsdrehung | B |
| 3. Teilungsdrehung | C |

(fortgesetzt)

| Parameter | c |
|---|---|
| Grundkreis | GK |
| Hypozykloide | HY |
| Messerkopfmittelpunkt = Rollkreismittelpunkt | M |
| Mittelpunkt des Grundkreises GK | MG |
| Teilkegelwinkel des Planrades | $\delta_p$ |
| Teilkegelwinkel des Kegelrades | $\delta$ |
| (Dreh-)Winkel | $\lambda$ |
| Modul | $m_p$ |
| Planradmitte | $M_P$ |
| Pfeil | P1 |
| Pfeil | P2 |
| Messerkopfradius | $r_c$ |
| Rollkreis | RK |
| Grundkreisradius | RG |
| Rollkreisradius | RR |
| Planrad-Halbmesser | Rp |
| Rotation um Achse 51 | R1 |
| Rotation um Achse 33 | R2 |
| Planrad-Teilungswinkel | $\tau_P$ |
| Punkt | U |
| Planradzähnezahl | $z_p$ |
| Zeiger | Z1, Z2, Z3 |

**Patentansprüche**

1. Verfahren zum Fertigen eines geradverzahnten Kegel-Tellerrads (32) im Formverfahren mit den folgenden Schritten,

- Bereitstellen eines Tellerradrohlings (32),
- Fräsen der Zahnlücken des Tellerrads (32) durch Bearbeitung des Tellerradrohlings (32) mit einem ersten Werkzeug (50), das um eine Werkzeugachse (51, 102) in Rotation (R1) versetzt wird während der Tellerradrohling (32) kontinuierlich um eine Werkstückachse (33) gedreht wird,

i. wobei das erste Werkzeug (50) durch ein kegelförmiges virtuelles Erzeugungsrad (41) definiert ist, das der invertierten Kegelform des zu fertigenden Tellerrads (32) entspricht,
ii. wobei beim Fräsen des Tellerrads (32) eine Hypozykloide (HY) als Flankenlängslinie erzeugt wird, indem die Drehung des ersten Werkzeugs (50) um seine Werkzeugachse (51, 102) und die Drehung des Tellerradrohlings (32) um seine Werkstückachse (33) gekoppelt sind, und
iii. wobei es sich bei der Hypozykloide (HY) um eine geradlinige Hypozykloide handelt,

**dadurch gekennzeichnet, dass** beim Fräsen der Zahnlücken das erste Werkzeug (50) eine reine Tauchbewegung (40) an dem Tellerradrohling (32) ausführt.

2. Verfahren nach Anspruch 1, **dadurch gekennzeichnet, dass** die Flankenlängslinie eine gerade Hypozykloide oder eine geradlinige Hypozykloide ist.

3. Verfahren nach Anspruch 1 oder 2, **dadurch gekennzeichnet, dass** zur Definition der Hypozykloide (HY) eine der beiden folgenden Bedingungen vorgegeben wird:

- der Grundkreisradius (RG) des Grundkreises (GK) ist doppelt so groß wie der Rollkreisradius (RR), oder
- der Grundkreisradius (RG) des Grundkreises (GK) ist ungefähr doppelt so groß wie der Rollkreisradius (RR), d.h. Grundkreisradius/Rollkreisradius = $2 \pm 5\%$.

4. Verfahren nach einem der vorhergehenden Ansprüche, **dadurch gekennzeichnet, dass** es sich bei dem ersten Werkzeug (50) um ein Fräswerkzeug, vorzugsweise um einen Stirnmesserkopf handelt.

5. Verfahren nach einem der vorhergehenden Ansprüche, **dadurch gekennzeichnet, dass** bei der Auslegung des Tellerrads (32) in einem vorbereitenden Verfahrensschritt von dem kegelförmigen virtuellen Erzeugungsrad (41) ausgegangen wird.

6. Verfahren nach einem der vorhergehenden Ansprüche, **dadurch gekennzeichnet, dass** das kegelförmige virtuelle Erzeugungsrad (41) durch das erste Werkzeug (50) nachgebildet ist.

7. Verfahren nach einem der vorhergehenden Ansprüche, **dadurch gekennzeichnet, dass** Schneiden des ersten Werkzeugs (50) im Bereich seines Eingriffs die Zähne (44) des kegelförmigen virtuellen Erzeugungsrades (41) darstellen.

8. Verfahren nach Anspruch 1 oder 2, **dadurch gekennzeichnet, dass** an dem Tellerradrohling (32) Zahnlücken mit Zahnflanken gefräst werden, deren Profilkrümmung sich direkt ergibt aus der Werkzeugprofilform des ersten Werkzeugs (50), wobei die Zahnflanken vorzugsweise in Profilrichtung betrachtet eine geringe Krümmung haben.

9. Verfahren nach Anspruch 8, **dadurch gekennzeichnet, dass** die Zahnflanken in Profilrichtung betrachtet einen Krümmungsradius aufweisen, der grösser ist als 20* das mittlere Normalmodul.

10. Verfahren nach Anspruch 8 oder 9, **dadurch gekennzeichnet, dass** der Krümmungsradius festgelegt wird in Bezug auf eine unmodifizierte Zahnflanke.

11. Verfahren nach einem der vorhergehenden Ansprüche, **dadurch gekennzeichnet, dass** zusätzlich zu dem Tellerrad (32) auch ein entsprechendes Ritzel (31) aus einem Ritzelrohling (31) gefertigt wird, wobei zu diesem Zweck ein zweites Werkzeug (60) zum Einsatz kommt.

12. Verfahren nach Anspruch 11, **dadurch gekennzeichnet, dass** Zahnlücken des Ritzels (31) mit dem zweiten Werkzeug (60) gefräst werden, das um eine Werkzeugachse (61, 102) in Rotation versetzt wird und das eine Wälzbewegung gemäss einem modifizierten Wälzverfahren zum fräsenden Erzeugen der Zahnlücken des zu bearbeitenden Ritzelrohlings (31) ausführt, während der Ritzelrohling (31) kontinuierlich um eine Werkstückachse (34) gedreht wird, wobei das zweite Werkzeug (60) durch das kegelförmige virtuelle Erzeugungsrad (41) definiert ist.

13. Verfahren nach Anspruch 12, **dadurch gekennzeichnet, dass** es sich bei der Wälzbewegung um eine Schwenkbewegung um eine Wälzwiegenachse (43) handelt, die durch eine Wälzanfangsposition und eine Wälzendposition festgelegt ist.

14. Verfahren nach Anspruch 11, **dadurch gekennzeichnet, dass** das Tellerrad (32) und das Ritzel (31) ein Kegelradpaar (30) mit einem Übersetzungsverhältnis (i) grösser 2 bilden.

15. Verfahren nach einem der Ansprüche 1 - 12, **dadurch gekennzeichnet, dass** es sich bei der Wälzbewegung um eine Schwenkbewegung um eine Wälzwiegenachse (43) handelt, die durch einen Wälzwiegewinkel festgelegt ist, wobei die Wälzwiegenachse (43) der Planradachse des kegelförmigen virtuellen Erzeugungsrads (41) entspricht.

16. Verfahren nach einem der vorhergehenden Ansprüche, **dadurch gekennzeichnet, dass** mit dem ersten Werkzeug (50) durch die Tauchbewegung (40) die Zahnlücken durch Tauchfräsen erzeugt werden.

17. Verfahren nach einem der vorhergehenden Ansprüche, **dadurch gekennzeichnet, dass** durch das Tauchen des ersten Werkzeugs (50) im Formverfahren in dem Tellerradrohling (32) das Werkzeugprofil des ersten Werkzeugs (50) genau als Zahnlücke am Tellerradrohling (32) abgebildet wird.

18. Verfahren nach einem der vorhergehenden Ansprüche, **dadurch gekennzeichnet, dass** beim Tauchen lediglich die Tiefenposition als Vorschubachse eine lineare Einstechbewegung (40) verwendet wird.

**Claims**

1. A method for manufacturing a straight-toothed bevel crown wheel (32) in the forming method having the following steps:

   - providing a crown wheel blank (32),
   - milling the tooth gaps of the crown wheel (32) by machining the crown wheel blank (32) using a first tool (50), which is set into rotation (R1) around a tool axis (51, 102), while the crown wheel blank (32) is continuously rotated around a workpiece axis (33),

      i. the first tool (50) being defined by a conical virtual generation wheel (41), which corresponds to the inverted cone shape of the crown wheel (32) to be manufactured,
      ii. a hypocycloid (HY) being generated as a flank longitudinal line during the milling of the crown wheel (32), in that the rotation of the first tool (50) around its tool axis (51, 102) and the rotation of the crown wheel blank (32) around its workpiece axis (33) are coupled, and
      iii. the hypocycloid (HY) being a linear hypocycloid,

   **characterized in that**, during the milling of the tooth gaps, the first tool (50) solely executes a plunging movement (40) on the crown wheel blank (32).

2. The method according to Claim 1, **characterized in that** the flank longitudinal line is a straight hypocycloid or a linear hypocycloid.

3. The method according to Claim 1 or 2, **characterized in that**, for the definition of the hypocycloid (HY), one of the two following conditions is predefined:

   - the base circle radius (RG) of the base circle (GK) is twice as large as the rolling circle radius (RR), or
   - the base circle radius (RG) of the base circle (GK) is approximately twice as large as the rolling circle radius (RR), i.e., base circle radius/rolling circle radius = 2 ± 5%.

4. The method according to one of the preceding claims, **characterized in that** the first tool (50) is a milling tool, preferably a face cutter head.

5. The method according to one of the preceding claims, **characterized in that** the design of the crown wheel (32) in a preparatory method step proceeds from the conical virtual generation wheel (41).

6. The method according to one of the preceding claims, **characterized in that** the conical virtual generation wheel (41) is modeled by the first tool (50).

7. The method according to one of the preceding claims, **characterized in that** cutters of the first tool (50) in the region of its engagement represent the teeth (44) of the conical virtual generation wheel (41).

8. The method according to Claim 1 or 2, **characterized in that** tooth gaps having tooth flanks are milled on the crown wheel blank (32), whose profile curvature results directly from the tool profile shape of the first tool (50), the tooth flanks preferably having a slight curvature viewed in the profile direction.

9. The method according to Claim 8, **characterized in that** the tooth flanks, viewed in the profile direction, have a radius of curvature which is greater than 20 times the mean normal module.

10. The method according to Claim 8 or 9, **characterized in that** the radius of curvature is fixed in relation to an unmodified tooth flank.

11. The method according to one of the preceding claims, **characterized in that**, in addition to the crown wheel (32), a corresponding pinion (31) is also manufactured from a pinion blank (31), a second tool (60) being used for this purpose.

12. The method according to Claim 11, **characterized in that** tooth gaps of the pinion (31) are milled using the second tool (60), which is set into rotation around a tool axis (61, 102) and which executes a rolling movement according to a modified rolling method for the milling generation of the tooth gaps of the pinion blank (31) to be machined, while the pinion blank (31) is continuously rotated around a workpiece axis (34), the second tool (60) being defined by the conical virtual generation wheel (41).

13. The method according to Claim 12, **characterized in that** the rolling movement is a pivot movement around a roll-sway axis (43), which is fixed by a rolling starting position and a rolling end position.

14. The method according to Claim 11, **characterized in that** the crown wheel (32) and the pinion (31) form a bevel gear pair (30) having a transmission ratio (i) greater than 2.

15. The method according to one of Claims 1 to 12, **characterized in that** the rolling movement is a pivot movement around a roll-sway axis (43), which is fixed by a roll-sway angle, the roll-sway axis (43) corresponding to the crown gear axis of the conical virtual generation wheel (41).

16. The method according to one of the preceding claims, **characterized in that** the tooth gaps are generated by plunge milling using the first tool (50) by the plunging movement (40).

17. The method according to one of the preceding claims, **characterized in that** the tool profile of the first tool (50) is modeled precisely as a tooth gap on the crown wheel blank (32) by the plunging of the first tool (50) in the forming method into the crown wheel blank (32).

18. The method according to one of the preceding claims, **characterized in that** only the depth position is used as the feed axis of a linear piercing movement (40) during the plunging.

## Revendications

1. Procédé pour fabriquer une couronne conique de différentiel à denture droite (32) dans un processus de moulage, comprenant les étapes consistant à :

    - préparer une ébauche de couronne de différentiel (32),
    - fraiser les entredents de la couronne de différentiel (32) par usinage de l'ébauche de couronne de différentiel (32) avec un premier outil (50) qui est déplacé en rotation (R1) autour d'un axe d'outil (51, 102) pendant que l'ébauche de couronne de différentiel (32) est tournée en continu autour d'un axe de pièce (33),

        i. le premier outil (50) étant défini par une roue génératrice virtuelle conique (41) qui correspond à la forme conique inversée de la couronne de différentiel à fabriquer (32),
        ii. pendant le fraisage de la couronne de différentiel (32) une hypocycloïde (HY) étant produite en tant que ligne de développante de flanc, la rotation du premier outil (50) autour de son axe d'outil (51, 102) et la rotation de l'ébauche de couronne de différentiel (32) autour de son axe de pièce (33) étant couplées, et
        iii. l'hypocycloïde (HY) étant une hypocycloïde droite,

    **caractérisé en ce que** lors du fraisage des entredents, le premier outil (50) réalise un mouvement de plongée pur (40) sur l'ébauche de couronne de différentiel (32).

2. Procédé selon la revendication 1, **caractérisé en ce que** la ligne de développante de flanc est une hypocycloïde droite ou une hypocycloïde linéaire.

3. Procédé selon la revendication 1 ou 2, **caractérisé en ce que**, pour la définition de l'hypocycloïde (HY), il est fixé l'une des deux conditions suivantes :

    - le rayon (RG) du cercle de base (GK) est deux fois plus grand que le rayon de cercle primitif (RR), ou
    - le rayon (RG) du cercle de base (GK) est approximativement deux fois plus grand que le rayon de cercle primitif (RR), c'est-à-dire que rayon du cercle de base/rayon de cercle primitif = $2 \pm 5\%$.

4. Procédé selon l'une des revendications précédentes, **caractérisé en ce que** le premier outil (50) est un outil de fraisage, de préférence une tête de fraisage.

**5.** Procédé selon l'une des revendications précédentes, **caractérisé en ce que** pour la conception de la couronne de différentiel (32) dans une étape préparatoire, on part de la roue génératrice virtuelle conique (41).

**6.** Procédé selon l'une des revendications précédentes, **caractérisé en ce que** la roue génératrice virtuelle conique (41) est reproduite par le premier outil (50).

**7.** Procédé selon l'une des revendications précédentes, **caractérisé en ce que** la coupe du premier outil (50) dans la zone de son engagement représente les dents (44) de la roue génératrice virtuelle conique (41).

**8.** Procédé selon la revendication 1 ou 2, **caractérisé en ce qu'**il est fraisé sur l'ébauche de couronne de différentiel (32) des entredents avec des flancs de dents, dont la courbure de profil découle directement de la forme de profil du premier outil (50), les flancs de dents ayant de préférence, vus dans le sens du profil, une faible courbure.

**9.** Procédé selon la revendication 8, **caractérisé en ce que** les flancs de dents, vus dans le sens du profil, présentent un rayon de courbure supérieur à 20 fois le module réel médian.

**10.** Procédé selon la revendication 8 ou 9, **caractérisé en ce que** le rayon de courbure est déterminé en fonction d'un flanc de dent non modifié.

**11.** Procédé selon l'une des revendications précédentes, **caractérisé en ce que**, en plus de la couronne de différentiel (32), il est fabriqué à partir d'une ébauche de pignon (31) un pignon correspondant (31), un deuxième outil (60) étant utilisé à cet effet.

**12.** Procédé selon la revendication 11, **caractérisé en ce que** des entredents du pignon (31) sont fraisés avec le deuxième outil (60), lequel outil est déplacé en rotation autour d'un axe d'outil (61, 102) et effectue un mouvement de roulement conformément à un procédé de roulement modifié pour produire par fraisage les entredents de l'ébauche de pignon à usiner (31), pendant que l'ébauche de pignon (31) tourne en continu autour d'un axe de pièce (34), le deuxième outil (60) étant défini par la roue génératrice virtuelle conique (41).

**13.** Procédé selon la revendication 12, **caractérisé en ce que** le mouvement de roulement est un mouvement de pivotement autour d'un axe de roulement (43) qui est défini par une position de début de roulement et une position de fin de roulement.

**14.** Procédé selon la revendication 11, **caractérisé en ce que** la couronne de différentiel (32) et le pignon (31) forment une paire de roues coniques (30) avec un rapport de démultiplication (i) supérieur à 2.

**15.** Procédé selon l'une des revendications 1 à 12, **caractérisé en ce que** le mouvement de roulement est un mouvement de pivotement autour d'un axe de roulement (43) qui est défini par un angle de roulement, l'axe de roulement (43) correspondant à l'axe de roue de chant de la roue génératrice virtuelle conique (41).

**16.** Procédé selon l'une des revendications précédentes, **caractérisé en ce que** le premier outil (50), de par le mouvement de plongée (40), réalise les entredents par un fraisage en plongée.

**17.** Procédé selon l'une des revendications précédentes, **caractérisé en ce qu'**en immergeant le premier outil (50) dans le procédé de moulage dans l'ébauche de couronne de différentiel (32), le profil d'outil du premier outil (50) est reproduit à l'identique sous forme d'entredent sur l'ébauche de couronne de différentiel (32).

**18.** Procédé selon l'une des revendications précédentes, **caractérisé en ce qu'**en immergeant uniquement la position en profondeur comme axe d'avance, on utilise une passe de plongée linéaire (40).

Fig. 1A

Fig. 1B

**Fig. 1C**

**Fig. 2**

$\lambda = 0^0$

HY

**Fig. 3A**

$\lambda = 45^0$

HY

**Fig. 3B**

$\lambda = 90^0$

HY

**Fig. 3C**

$\lambda = 135^0$

HY

**Fig. 3D**

$\lambda = 180^0$

HY

**Fig. 3E**

$\lambda = 225^0$

HY

**Fig. 3F**

$\lambda = 270^0$

HY

**Fig. 3G**

$\lambda = 315^0$

HY

**Fig. 3H**

**Fig. 4A**

**Fig. 4B**

18

Fig. 5

Fig. 6

**Fig. 7**

30

34

31

33

32

**Fig. 8**

**Fig. 9A**

**Fig. 9B**

EP 2 314 405 B1

Fig. 10A

Fig. 11A

Fig. 10B

Fig. 11B

31

41

32

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1348509 A2
- US 1982036 A
- US 2105104 A
- US 2310484 A

**In der Beschreibung aufgeführte Nicht-Patentliteratur**

- **V. N. Kedrinskij ; K. M. Pismanik ; Izdatelstvo.** Stanki dja obrabotki konitscheskich zubtschatych ko-los. *Maschinostroenie,* 1967, 506-508
- **von J. Klingelnberg.** *Kegelräder; Grundlagen, An-wendungen,* 2008, 16-17
- **JAN KLINGELNBERG.** Kegelräder; Grundlagen, Anwendungen. Springer Verlag, 2008, 39 ff